# EUROPEAN PATENT APPLICATION

(11) **EP 4 852 387 A1**
(43) Date of publication of application: **09.12.2026**
(21) Application number: 24925445.9
(22) Date of filing: 02.08.2024
(51) Int. Cl.: H04L 41/0803

(54) **CACHE ENABLING MANAGEMENT METHOD FOR NAS AND RELATED DEVICE**

(30) Priority: 21.02.2024 CN 202410194969
(71) Applicant: HUAWEI TECHNOLOGIES CO., LTD., Shenzhen, Guangdong 518129 (CN)
(72) Inventor: ZHANG, Mingqian, Shenzhen, Guangdong 518129 (CN); YAN, Haitao, Shenzhen, Guangdong 518129 (CN); JIANG, Zhongbing, Shenzhen, Guangdong 518129 (CN); WANG, Bin, Shenzhen, Guangdong 518129 (CN)
(74) Representative: Huawei European IPR
(86) International application number: PCT/CN2024/109385
(87) International publication number: WO 2025/175703

(57) **Abstract**

A cache enablement management method for NAS and a related device are provided. The method is applied to NAS-based use cases. The method includes: At least one service is deployed in a NAS client; when the NAS client is to obtain configuration information corresponding to a first service in the at least one service, the NAS client sends a first query request corresponding to the first service to a NAS server, where the query request is used to obtain the configuration information corresponding to the first service; and then the NAS client receives first configuration information fed back by the NAS server and determines, based on the first configuration information, whether to enable a local cache function of the first service. By using the NAS server to implement differentiated management on whether to enable the local cache function, this solution meets personalized requirements of different services.

## Description

This application claims priority to Chinese Patent Application No. 202410194969.0, filed with the China National Intellectual Property Administration on February 21, 2024 and entitled "CACHE ENABLEMENT MANAGEMENT METHOD FOR NAS AND RELATED DEVICE", which is incorporated herein by reference in its entirety.

### TECHNICAL FIELD

This application relates to the field of computer technologies, and in particular, to a cache enablement management method for NAS and a related device.

### BACKGROUND

With the development of network attached storage (NAS) technologies, a plurality of NAS-based services may be deployed in the same NAS client, and different services may have different requirements. For example, a service 1 and a service 2 are deployed on the same NAS client. The service 1, which reads a large amount of data each time, may prefer the client to cache the read file data for a period of time, so that it can directly read the file data from the client cache during subsequent use, instead of sending a request to the server each time. In other words, the service 1 requires a local cache function. By contrast, the service 2 may require that modifications to file data be immediately updated to the server, meaning that the service 2 does not want to use the local cache function.

In related technologies, when a service in a NAS client requires caching, the cache function may be enabled on the client. However, enabling the cache function is not beneficial to all applications. Once the cache function is enabled, other services in the NAS client are forced to use caching even if they do not require it. Obviously, this rigid approach to cache management is problematic.

### SUMMARY

This application provides a cache enablement management method for NAS and a related device, to use a NAS server to implement differentiated management on whether to enable a local cache function.

A first aspect of this application provides a cache enablement management method for NAS, and the method is applied to a NAS technology-based use case. In the method, a plurality of services using a NAS technology are deployed in a NAS client, and a first service is any one of the plurality of services using the NAS technology. When the NAS client wants to obtain configuration information corresponding to the first service, the NAS client sends a first query request corresponding to the first service to a NAS server, where the first query request is used to obtain the configuration information corresponding to the first service.

The NAS client may receive first configuration information fed back by the NAS server, and then determine, based on the first configuration information when the first service in the NAS client generates a read instruction or a write instruction, whether to enable a local cache function of the first service. The first configuration information indicates whether to enable the local cache function of the first service. For example, the local cache function of the first service is used to cache data that is generated by the first service and that needs to be stored in the NAS server and/or data that is read from the NAS server based on the first service.

At least two different services in the plurality of services deployed in the NAS client correspond to different configuration information. For example, in all of the plurality of services deployed in the NAS client, some services may correspond to same configuration information, that is, some of the plurality of services may have the same configuration about whether to enable a local cache function, but at least two different services in the plurality of services correspond to different configuration information. For example, a service 1, a service 2, a service 3, and a service 4 are deployed in the NAS client, the service 1 corresponds to configuration information 1, the service 2 corresponds to configuration information 2, the service 3 corresponds to configuration information 3, the service 4 corresponds to configuration information 4, a service 5 corresponds to configuration information 5, the configuration information 1 and the configuration information 2 have different configurations about whether to enable a local cache function, and the configuration information 1, the configuration information 3, and the configuration information 4 may have the same configuration about whether to enable a local cache function. It should be understood that the example herein is merely for ease of understanding of the concept "at least two different services in the plurality of services correspond to different configuration information". Herein, "configuration information" may be one of "enable a local cache" and "not enable a local cache".

When the plurality of services are deployed in the NAS client, if the NAS client lacks a configuration item for a local cache function, the plurality of services in the NAS client can share only one piece of default configuration information on the NAS client, making it impossible to meet personalized configuration requirements for the local cache function corresponding to different services. However, in this implementation, the NAS client performs a personalized configuration according to a specific requirement of a service, and can differently configure the local cache function to be enabled/disabled for different services, to meet personalized requirements of different services. Specifically, the NAS server records requirements of different services on whether to enable a cache, and the NAS client obtains the requirements by sending a query request to the NAS server, and then starts (or does not start) a local cache of the client for a specific service based on this indication.

In a possible implementation, the method further includes: The NAS client sends a second query request corresponding to a second service to the NAS server, receives second configuration information corresponding to the second service and fed back by the NAS server, and then determines, based on the second configuration information, not to enable a local cache function of the second service. The second service is one of the plurality of services deployed in the NAS client other than the first service. The second query request is used to obtain configuration information corresponding to the second service. The second configuration information is different from the first configuration information. The first configuration information corresponding to the first service specifically indicates to enable the local cache function of the first service, and the second configuration information corresponding to the second service specifically indicates not to enable the local cache function of the second service.

For example, when the first service in the NAS client generates a read/write instruction, the NAS client determines, based on the first configuration information fed back by the NAS server, to enable the local cache function, and then may determine how to use the local cache function of the first service. When the second service in the NAS client generates a read/write instruction, the NAS client determines, based on the second configuration information fed back by the NAS server, to disable the local cache function, and then may determine how to implement a data read/write operation when the local cache function is not used.

In this implementation, the NAS client can obtain not only the first configuration information corresponding to the first service, but also the second configuration information corresponding to the second service. The second configuration information is different from the first configuration information. To be specific, the first configuration information indicates to enable the local cache function of the first service, and the second configuration information indicates not to enable the local cache function of the second service. This further clarifies that a local cache function can be enabled/disabled for different services through personalized configurations, to meet personalized requirements of different services.

In a possible implementation, when data generated by the first service is stored in at least one first file system of the NAS server, and the received first configuration information includes at least one piece of first configuration information in one-to-one correspondence with the at least one first file system, that the NAS client determines, based on the first configuration information, whether to enable the local cache function of the first service may include: When the first service in the NAS client generates a read/write instruction, the NAS client determines that a storage location corresponding to the read/write instruction belongs to a target file system in the at least one first file system; and the NAS client may obtain one piece of target configuration information corresponding to the target file system from the at least one piece of first configuration information in one-to-one correspondence with the at least one first file system, and then may determine, based on the target configuration information, whether to enable the local cache function of the first service. In other words, the target configuration information is configuration information corresponding to the target file system in the at least one piece of first configuration information, the at least one first file system includes the target file system, and the target file system is a file system to which the storage location corresponding to the read/write instruction generated by the first service in the NAS client belongs.

In this implementation, the NAS server enables/disables a local cache function on the NAS client for data configurations in different file systems, and data generated by each service is stored in a file system managed by the NAS server. Because the data generated by the first service is stored in the first file system, when the NAS client sends the query request corresponding to the first service to the NAS server, the NAS client can obtain configuration information of the first file system, to implement personalized configurations for different services by configuring a local cache function on the NAS client to be enabled/disabled for different file systems. When the first service in the NAS client generates a read/write instruction, a target file system to which a storage location of to-be-read data/to-be-written data belongs is first determined, and then whether to enable the local cache function is determined based on target configuration information corresponding to the target file system. Because file systems are usually managed based on data features, data stored in the same file system has the same feature, so that the data in the same file system usually has the same requirement for enabling/disabling a local cache function, that is, a local cache of the NAS client needs to be enabled when data is read/written in a file system, or a local cache of the NAS client needs to be disabled when data is read/written in a file system. Therefore, whether to enable a local cache function is configured at a file system granularity, which is beneficial for better meeting a personalized configuration requirement for a local cache function.

In a possible implementation, in the method, the NAS client may further determine that the data generated by the first service is stored in the at least one first file system of the NAS server, and then determine the first query request corresponding to the first service. The first query request corresponding to the first service includes identification information of each of the at least one first file system, and the identification information of each first file system included in the query request indicates to obtain the first configuration information corresponding to each first file system.

Because the NAS server is communicatively connected to a plurality of NAS clients, if the NAS server determines, after receiving a query request corresponding to a specific service and sent by a NAS client, a file system in which data generated by the service is stored, the NAS server needs to process a query request from each NAS client, greatly increasing workload of the NAS server. In this implementation, each NAS client determines a file system in which the data generated by the first service is stored in the NAS server, and includes identification information of the foregoing file system in the query request, so that the NAS server can directly determine, based on the identification information carried in the query request, a file system whose configuration information needs to be fed back to the NAS client. This helps the NAS client obtain configuration information more quickly, that is, helps improve efficiency of an entire procedure.

In a possible implementation, the first configuration information is updatable, and an update operation of the first configuration information is performed by the NAS server. In a process of using a specific service, a requirement of data generated by a service for whether to enable a local cache function may change. In this implementation, configuration information corresponding to a specific service may be further modified by using the NAS server. This helps further improve cache management flexibility, and also helps better meet a personalized configuration requirement for a local cache function.

In a possible implementation, the first configuration information includes at least one of the following: first sub-information, where the first sub-information indicates whether to enable the local cache function when the first service in the NAS client generates a read/write instruction for a directory; second sub-information, where the second sub-information indicates whether to enable the local cache function when the first service in the NAS client generates a read/write instruction for a file attribute; and third sub-information, where the third sub-information indicates whether to enable the local cache function when the first service in the NAS client generates a read/write instruction for file data.

In this implementation, the first sub-information, the second sub-information, and the third sub-information respectively correspond to a directory, a file attribute, and file data. In other words, data generated by the same service may be further classified into a directory, a file attribute, and file data, and a personalized configuration for enabling/disabling a local cache function is performed at a finer granularity. This not only meets personalized requirements of different services for the local cache, but also meets personalized requirements of data of different types generated by the same service for a local cache, thereby helping further improve cache management flexibility.

In a possible implementation, when the first configuration information indicates to enable the local cache function of the first service, the first configuration information further indicates a cache validity period for data in the enabled cache. For example, the first configuration information further includes at least one of the following: first time information corresponding to a directory, second time information corresponding to a file attribute, or third time information corresponding to file data. The first time information indicates a validity period for the directory cached in the NAS client, the second time information indicates a validity period for the file attribute cached in the NAS client, and the third time information indicates a validity period for the file data cached in the NAS client.

In this implementation, when a local cache function of a specific service is enabled, a personalized configuration may be further performed on a cache validity period for data in the enabled cache. This further improves local cache management flexibility, helps meet personalized configuration requirements in more aspects for a local cache, and helps improve user viscosity of this solution.

In a possible implementation, the method further includes: The NAS server receives the first query request corresponding to the first service and sent by the NAS client, obtains, in response to the received first query request, the first configuration information corresponding to the first service from a plurality of pieces of pre-stored configuration information, and then sends the first configuration information to the NAS client, where the first query request is used to obtain the configuration information corresponding to the first service, and the first configuration information indicates whether to enable the local cache function of the first service. In this implementation, not only implementation steps of the NAS client are provided, but also implementation steps of the NAS server are provided, thereby improving completeness of this solution.

A second aspect of this application provides a cache enablement management method for NAS, and the method is applied to a NAS technology-based use case. In the method, a NAS server may receive a first query request corresponding to a first service and sent by a NAS client, where the first query request is used to obtain configuration information corresponding to the first service; and the NAS server obtains, in response to the received first query request, first configuration information corresponding to the first service from a plurality of pieces of pre-stored configuration information, and then sends the first configuration information to the NAS client, where the first configuration information indicates whether to enable a local cache function of the first service.

In a possible implementation, the method further includes: The NAS server receives a second query request corresponding to a second service and sent by the NAS client, where the second query request is used to obtain configuration information corresponding to the second service, a plurality of services are deployed in the NAS client, the first service is any one of the plurality of services, and the second service is one of the plurality of services other than the first service; and the NAS server obtains, in response to the received second query request, second configuration information corresponding to the second service from the plurality of pieces of pre-stored configuration information, and then sends the second configuration information to the NAS client, where the second configuration information indicates whether to enable a local cache function of the second service, and the second configuration information is different from the first configuration information.

In a possible implementation, when the plurality of pieces of configuration information are in one-to-one correspondence with a plurality of file systems of the NAS server, because data generated by the first service is stored in at least one first file system included in the foregoing plurality of file systems, the first query request corresponding to the first service may be used to obtain the first configuration information corresponding to each first file system. In this case, that the NAS server obtains, in response to the received first query request, the first configuration information corresponding to the first service from the plurality of pieces of pre-stored configuration information may include: The NAS server obtains, in response to the received first query request, the first configuration information corresponding to each first file system from the plurality of pieces of pre-stored configuration information in one-to-one correspondence with the plurality of file systems of the NAS server.

In a possible implementation, when the first query request corresponding to the first service includes identification information of each of the at least one first file system, that the NAS server obtains, in response to the received first query request, the first configuration information corresponding to the first service from the plurality of pieces of pre-stored configuration information may include: The NAS server obtains, based on the identification information of the first file system in the first query request, the first configuration information corresponding to the first file system from the plurality of pieces of pre-stored configuration information in one-to-one correspondence with the plurality of file systems of the NAS server.

In a possible implementation, the method further includes: The NAS server obtains a configuration operation through a display interface, and then determines the plurality of pieces of pre-stored configuration information in response to the obtained configuration operation. In this implementation, because the NAS server provides a display interface for obtaining a configuration operation on configuration information, a user may conveniently enter a configuration operation through the display interface, to meet personalized requirements of different services for the local cache. In addition, the user may conveniently perform a personalized configuration on a local cache through the display interface according to an actual requirement of the user. This helps improve user viscosity of this solution.

In a possible implementation, the method further includes: The NAS server obtains a modification operation through the display interface, and then updates the first configuration information in response to the obtained modification operation, to obtain updated first configuration information.

For meanings of the terms and beneficial effects in the second aspect of this application, refer to the first aspect. Details are not described herein again.

A third aspect of this application provides a cache enablement management apparatus for NAS, and the apparatus is used in a NAS technology-based use case. The cache enablement management apparatus for NAS is deployed in a NAS client, at least one service is deployed in the NAS client, and the cache enablement management apparatus for NAS includes: a sending module, configured to send a first query request corresponding to a first service to a NAS server, where a plurality of services are deployed in the NAS client, the first service is any one of the plurality of services, the first query request is used to obtain configuration information corresponding to the first service, and at least two different services in the plurality of services correspond to different configuration information; a receiving module, configured to receive first configuration information fed back by the NAS server, where the first configuration information indicates whether to enable a local cache function of the first service; and a determining module, configured to determine, based on the first configuration information, whether to enable the local cache function of the first service.

In the third aspect of this application, the cache enablement management apparatus for NAS may be further configured to perform the steps performed by the NAS client in the first aspect and the possible implementations of the first aspect. For specific implementations of the steps, meanings of the terms, and beneficial effects in the third aspect, refer to the first aspect. Details are not described herein again.

A fourth aspect of this application provides a cache enablement management apparatus for NAS, and the apparatus is used in a NAS technology-based use case. The cache enablement management apparatus for NAS is deployed in a NAS server, and the cache enablement management apparatus for NAS includes: a receiving module, configured to receive a first query request corresponding to a first service and sent by a NAS client, where the first query request is used to obtain configuration information corresponding to the first service; an obtaining module, configured to obtain, in response to the received first query request, first configuration information corresponding to the first service from a plurality of pieces of pre-stored configuration information; and a sending module, configured to send the first configuration information to the NAS client, where the first configuration information indicates whether to enable a local cache function of the first service.

In the fourth aspect of this application, the cache enablement management apparatus for NAS is further configured to perform the steps performed by the NAS server in the second aspect and the possible implementations of the second aspect. For specific implementations of the steps, meanings of the terms, and beneficial effects in the fourth aspect, refer to the second aspect. Details are not described herein again.

A fifth aspect of this application provides a cache enablement management system for NAS. The cache enablement management system for NAS includes a NAS client and a NAS server, the cache enablement management apparatus for NAS according to the third aspect is deployed in the NAS client, and the cache enablement management apparatus for NAS according to the fourth aspect is deployed in the NAS server.

A sixth aspect of this application provides a device. The device includes a processor and a memory, the memory is configured to store instructions, and the processor is configured to run the instructions to cause a compute device cluster to perform the method according to the first aspect or the second aspect.

A seventh aspect of this application provides a computer storage medium. The computer storage medium stores one or more instructions, and when the instructions are executed by one or more computers, the one or more computers are enabled to implement the method according to the first aspect or the second aspect.

An eighth aspect of this application provides a computer program product. The computer program product stores instructions, and when the instructions are executed by a computer, the computer is enabled to implement the method according to the first aspect or the second aspect.

The second aspect to the eighth aspect of this application correspondingly have a plurality of possible manners of the first aspect, and have corresponding beneficial effects.

### BRIEF DESCRIPTION OF DRAWINGS

FIG. 1 is a diagram of a NAS technology-based network architecture according to this application;
FIG. 2 is a schematic flowchart of a cache enablement management method for NAS according to an embodiment of this application;
FIG. 3 is an interface diagram of obtaining a configuration operation according to an embodiment of this application;
FIG. 4 is another interface diagram of obtaining a configuration operation according to an embodiment of this application;
FIG. 5 is another schematic flowchart of a cache enablement management method for NAS according to an embodiment of this application;
FIG. 6 is another schematic flowchart of a cache enablement management method for NAS according to an embodiment of this application;
FIG. 7 is another schematic flowchart of a cache enablement management method for NAS according to an embodiment of this application;
FIG. 8 is a diagram of obtaining a modification operation for first configuration information according to an embodiment of this application;
FIG. 9 is a diagram of a structure of a cache enablement management apparatus for NAS according to an embodiment of this application;
FIG. 10 is another diagram of a structure of a cache enablement management apparatus for NAS according to an embodiment of this application; and
FIG. 11 is a diagram of a structure of a device according to an embodiment of this application.

### DESCRIPTION OF EMBODIMENTS

The following describes embodiments of this application with reference to the accompanying drawings. It is clear that the described embodiments are merely some but not all of embodiments of this application. A person of ordinary skill in the art may learn that, as a new use case emerges, the technical solutions provided in embodiments of this application are also applicable to similar technical problems.

In this specification, the claims, and the accompanying drawings of this application, terms "first", "second", and the like are intended to distinguish between similar objects but do not necessarily indicate a specific order or sequence. It should be understood that the terms used in such a way are interchangeable in proper circumstances, which is merely a distinguishing manner that is used when objects having the same attribute are described in embodiments of this application. In addition, terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

In embodiments of this application, "sending" and "receiving" represent signal transfer directions. For example, "sending information to XX device" may be understood as that a destination end of the information is XX device, and may include directly sending the information through an air interface, or include indirectly sending the information through an air interface by another unit or module; and "receiving information from YY device" may be understood as that a source end of the information is YY device, and may include directly receiving the information from YY device through an air interface, or may include indirectly receiving the information from YY device from another unit or module through an air interface. Alternatively, "sending" may be understood as "outputting" of a chip interface, and "receiving" may be understood as "inputting" of a chip interface. In other words, sending and receiving may be performed between devices, or may be performed within a device. For example, sending or receiving is performed between components, modules, chips, software modules, or hardware modules within a device through a bus, a cable, or an interface. It may be understood that necessary processing, for example, coding and modulation, may be performed on information between a source end and a destination end of information sending. However, the destination end may understand valid information from the source end. A similar expression in this application may be understood similarly. Details are not described again.

In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information is indicated in a plurality of manners, for example, but not limited to, directly indicating the to-be-indicated information, for example, indicating the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may be indicated by using an arrangement sequence of all pieces of information that is pre-agreed on (for example, predefined in a protocol), to reduce indication overheads to some extent. A specific indication manner is not limited in this application. It may be understood that, for a sender of the indication information, the indication information may indicate to-be-indicated information, and for a receiver of the indication information, the indication information may be used to determine to-be-indicated information.

A method provided in this application may be applied to various scenarios using a network attached storage (network attached storage, NAS) technology. A NAS technology-based architecture includes a NAS client and a NAS server, and one or more NAS technology-based services may be deployed in the NAS client. For ease of description, any one of the foregoing one or more NAS technology-based services is referred to as a "first service", and a file generated by the first service is mounted to a first file system of the NAS server. In this case, data generated by the first service can be written into at least one first file system of the NAS server corresponding to the first service, and the first service can read the data from the foregoing first file system. The "first file system of the NAS server" may also be understood as a "first file system that can be accessed by the NAS server", or may be understood as a "first file system that can be managed by the NAS server", or the like.

For example, one NAS client may be specifically represented as a container (container), and one or more services using a NAS technology run in the container. For another example, one NAS client may be represented as an application program, and the application program includes one or more services using a NAS technology. A specific product form of the "NAS client" may be determined with reference to an actual use case. This is not limited in embodiments of this application.

There is a many-to-many relationship between "NAS technology-based services" and "file systems of the NAS server". For example, files generated by different services in the NAS client may be mounted to the same file system of the NAS server, and files generated by the same service in the NAS client may also be mounted to different file systems.

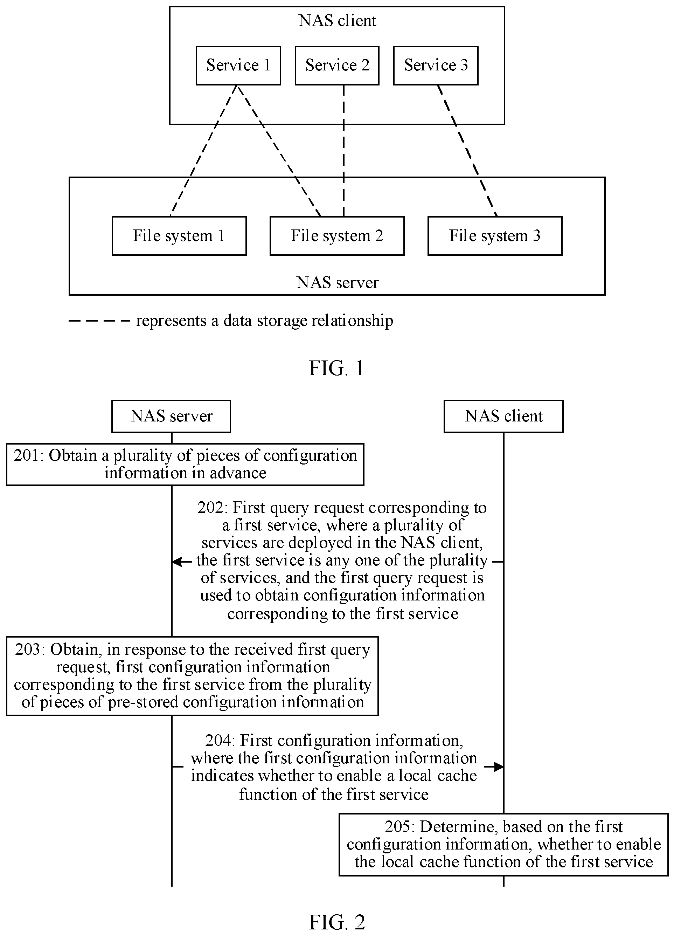

For more intuitive understanding of this solution, the following uses an example with reference to FIG. 1. FIG. 1 is a diagram of a NAS technology-based network architecture according to this application. In FIG. 1, for example, a service 1, a service 2, and a service 3 are deployed in a NAS client. Data generated by the service 1 is stored in a file system 1 and a file system 2 of a NAS server, that is, a file generated by the service 1 is mounted to the file system 1 and the file system 2. Data generated by the service 2 is stored in the file system 2 of the NAS server, that is, a file generated by the service 2 is mounted to the file system 2. Data generated by the service 3 is stored in a file system 3 of the NAS server, that is, a file generated by the service 3 is mounted to the file system 3. As shown in FIG. 1, files generated by the same service can be mounted to different file systems of the NAS server, and files generated by different services can also be mounted to the same file system of the NAS server. It should be understood that one NAS server may be connected to a plurality of NAS clients, more or fewer services may be deployed in each NAS client, and the NAS server may manage more or fewer file systems. An example in FIG. 1 is merely for ease of understanding of this solution, and is not intended to limit this solution.

When generating a read/write instruction for data, a service in the NAS client may want to enable a local cache function, or may want to disable a local cache function. Different services may have different requirements for the local cache function. For example, the service 1 wants to enable a local cache function, and the service 2 wants to disable a local cache function. In related technologies, a NAS client lacks a configuration item of a "local cache function", making different services in the NAS client share only the same piece of default configuration information. Therefore, when a service in the NAS client needs to use a cache function, the local cache function may be enabled on the client. However, enabling a local cache function is not beneficial to all applications. Once the cache function is enabled, other services in the NAS client are forced to use caching even if they do not require it. Obviously, this rigid approach to cache management is problematic.

To resolve the foregoing problem, this application provides a cache enablement management method for NAS. Specifically, FIG. 2 is a schematic flowchart of a cache enablement management method for NAS according to an embodiment of this application. The cache enablement management method for NAS provided in this embodiment of this application may include the following steps.

201: A NAS server obtains a plurality of pieces of configuration information in advance.

In this embodiment of this application, the NAS server needs to obtain the plurality of pieces of configuration information in advance, where each piece of configuration information indicates whether to enable a local cache function. In a case, the foregoing plurality of pieces of configuration information are in one-to-one correspondence with a plurality of file systems of the NAS server, that is, each file system of the NAS server corresponds to one piece of configuration information. For example, because the cache enablement management method for NAS provided in this application is used to obtain configuration information corresponding to a NAS technology-based service deployed in a NAS client, and data generated by each service deployed in the NAS client is stored in a plurality of file systems of the NAS server, in a manner of obtaining first configuration information corresponding to any service using a NAS technology in the NAS client (for ease of description, referred to as a "first service" subsequently), when data generated by the first service is stored in at least one first file system of the NAS server, at least one piece of configuration information corresponding to the first service may include at least one piece of first configuration information in one-to-one correspondence with the at least one first file system.

In another case, the foregoing plurality of pieces of configuration information are in one-to-one correspondence with a plurality of services provided by the NAS server, that is, each service provided by the NAS server corresponds to one piece of configuration information.

Each piece of configuration information indicates whether to enable a local cache function. The following describes specific content of each piece of first configuration information corresponding to any service (that is, the first service). For example, each piece of first configuration information corresponding to the first service indicates whether to enable a local cache function of the first service in the NAS client, which may also be understood as that each piece of first configuration information indicates whether to enable the local cache function of the first service in the NAS client when the first service in the NAS client generates a data access instruction for the NAS server. The data access instruction may be a write instruction for writing data into the NAS server, or may be a read instruction for reading data from the NAS server. The "local cache function" in this application may also be referred to as a "local cache mechanism", a "client cache function", a "client cache mechanism", or another name. This is not limited in embodiments of this application.

For example, a data type may be a directory, a file attribute, file data, or data of another type. In other words, the first service in the NAS client may generate a read instruction or a write instruction for a directory, or may generate a read instruction or a write instruction for a file attribute, or may generate a read instruction or a write instruction for file data. For example, the file attribute may include a file name, a file size, a file modification time, or another attribute, and the file data is specific data included in a file. It should be noted that types of the data generated by the first service may alternatively be classified at another granularity. For example, the data generated by the first service is classified into two types: a directory and a file. Specific types of the "data type" may be determined with reference to an actual use case. This is not limited in embodiments of this application.

In a case, the first configuration information may include configuration information corresponding to data of each type. Optionally, the first configuration information may include at least one of the following: first sub-information, where the first sub-information indicates whether to enable the local cache function when the first service in the NAS client generates a read/write instruction for a directory; second sub-information, where the second sub-information indicates whether to enable the local cache function when the first service in the NAS client generates a read/write instruction for a file attribute; and third sub-information, where the third sub-information indicates whether to enable the local cache function when the first service in the NAS client generates a read/write instruction for file data.

Further, in an implementation, the first sub-information indicates to enable the local cache function when the first service in the NAS client generates a read instruction or a write instruction for a directory, or the first sub-information indicates to disable the local cache function when the first service in the NAS client generates a read instruction or a write instruction for a directory.

In another implementation, the first sub-information may include first information and second information, the first information indicates whether to enable the local cache function when the first service in the NAS client generates a read instruction for a directory, and the second information indicates whether to enable the local cache function when the first service in the NAS client generates a write instruction for a directory.

Specific content included in the "second sub-information" is similar to that included in the "first sub-information", and a difference lies in that "directory" is replaced with "file attribute". Specific content included in the "third sub-information" is similar to that included in the "first sub-information", and a difference lies in that "directory" is replaced with "file data". Details are not described herein again.

In this embodiment of this application, the first sub-information, the second sub-information, and the third sub-information respectively correspond to a directory, a file attribute, and file data. In other words, data generated by the same service may be further classified into a directory, a file attribute, and file data, and a personalized configuration for enabling/disabling a local cache function is performed at a finer granularity. This not only meets personalized requirements of different services for the local cache, but also meets personalized requirements of data of different types generated by the same service for a local cache, thereby helping further improve cache management flexibility.

In another case, the first configuration information indicates to enable the local cache function when the first service in the NAS client generates a read instruction or a write instruction for data of any type; or the first configuration information indicates to disable the local cache function when the first service in the NAS client generates a read instruction or a write instruction for data of any type.

In another case, the first configuration information may include sub-information 1 and sub-information 2, the sub-information 1 indicates whether to enable the local cache function when the first service in the NAS client generates a write instruction, and the sub-information 2 indicates whether to enable the local cache function when the first service in the NAS client generates a read instruction.

Optionally, when the first configuration information indicates to enable the local cache function of the first service, the first configuration information further indicates a cache validity period for data in the enabled cache. For example, when the first service in the NAS client generates a write instruction, "the foregoing data" may be understood as data that is generated by the first service in the NAS client and that needs to be written into the NAS server. When the first service in the NAS client generates a read instruction, "the foregoing data" may be understood as data that is read from the NAS server and that is locally cached.

For example, cached data corresponding to the first service may include a directory, a file attribute, file data, or cached data of another type. For example, the validity period in this application may include a minimum period and a maximum period, or the validity period in this application may include a single period, which may be specifically determined flexibly with reference to an actual use case.

In an implementation, the first configuration information further includes at least one of the following: first time information corresponding to a directory, second time information corresponding to a file attribute, or third time information corresponding to file data. The first time information indicates a validity period for the directory cached in the NAS client, the second time information indicates a validity period for the file attribute cached in the NAS client, and the third time information indicates a validity period for the file data cached in the NAS client.

Further, in a case, the first time information includes a first sub-time and a second sub-time. When the first service in the NAS client generates a write instruction for a directory, the first sub-time indicates a validity period for caching the directory in the NAS client, that is, after the first service in the NAS client generates the directory, the directory needs to be synchronized to the NAS server within the validity period indicated by the first sub-time; and the second sub-time indicates a validity period for reading the directory from the NAS server and caching the directory in the NAS client.

In another case, a validity period corresponding to the generation of a directory by the first service in the NAS client is the same as a validity period for caching the directory in the NAS client, that is, the first time information includes one validity period.

A meaning of the "second time information" is similar to that of the "first time information", and a difference lies in that "directory" in the description of the "first time information" is replaced with "file attribute". A meaning of the "third time information" is similar to that of the "first time information", and a difference lies in that "directory" in the description of the "first time information" is replaced with "file data". Details are not described herein again.

To more intuitively understand the first configuration information, the following uses the first configuration information as an example with reference to Table 1 and Table 2. It should be noted that, in an actual case, the first configuration information may be stored in another format, for example, in a format of an array or a linked list. Herein, only a table form is used as an example.

**Table 1**

| First configuration information | |
|---|---|
| Whether to enable a local cache function | Validity period |
| Disable the local cache function when a write instruction for a directory is generated | / |
| Enable the local cache function when a write instruction for a file attribute is generated | 5s and 30s |
| Disable the local cache function when a write instruction for file data is generated | / |
| Enable the local cache function when a read instruction for a directory is generated | 20s and 60s |
| Enable the local cache function when a read instruction for a file attribute is generated | 30s |
| Disable the local cache function when a read instruction for file data is generated | / |

As shown in Table 1, the first configuration information indicates to disable the local cache function when the first service in the NAS client generates the write instruction for the directory, the write instruction for the file data, or the read instruction for the file data. To be specific, the first configuration information indicates that when the first service in the NAS client generates the write instruction for the directory, the foregoing directory is to be immediately synchronized to the NAS server corresponding to the first service; the first configuration information indicates that when the first service in the NAS client generates the write instruction for the file data, the foregoing file data is to be immediately synchronized to the NAS server corresponding to the first service; and the first configuration information indicates that when the first service in the NAS client generates the read instruction for the file data, the data is to be directly read from the NAS server corresponding to the first service based on a directory of the foregoing file data.

The first configuration information indicates to enable the local cache function when the first service in the NAS client generates the write instruction for the file attribute, and a minimum validity period is 5s and a maximum validity period is 30s for the file attribute cached by the first service in the NAS client. To be specific, the first configuration information indicates that after the first service in the NAS client generates the write instruction for the file attribute, the file attribute is to be synchronized to the NAS server corresponding to the first service after a minimum of 5s and a maximum of 30s.

The first configuration information indicates to enable the local cache function when the first service in the NAS client generates the read instruction for the directory, and a minimum validity period is 20s and a maximum validity period is 60s for the directory cached in the NAS client. To be specific, the first configuration information indicates that the directory cached in the NAS client becomes invalid after a minimum of 20s and a maximum of 60s, and the directory is updated after being invalid.

The first configuration information indicates to enable the local cache function when the first service in the NAS client generates the read instruction for the file data, and the validity period for the file attribute cached in the NAS client is 30s. To be specific, the first configuration information indicates that the file attribute cached in the NAS client becomes invalid after 30s, and the file attribute is updated after being invalid. It should be noted that the example in Table 1 is merely for ease of understanding of this solution. Specific information included in the first configuration information may be flexibly determined with reference to an actual use case. This is not limited in embodiments of this application.

**Table 2**

| First configuration information | |
|---|---|
| Whether to enable a local cache function | Validity period |
| Enable the local cache function when a read/write instruction for a directory is generated | 20s |
| Enable the local cache function when a read/write instruction for a file attribute is generated | 5s and 30s |
| Disable the local cache function when a read/write instruction for file data is generated | / |

As shown in Table 2, the first configuration information indicates to enable the local cache function when the first service in the NAS client generates the read instruction or the write instruction for the directory; and the validity period for the directory cached by the first service in the NAS client is 20s, and the validity period for the directory, generated by the first service, cached in the NAS client is 20s. The first configuration information further indicates to enable the local cache function when the first service in the NAS client generates the read instruction or the write instruction for the file attribute; a minimum validity period is 5s and a maximum validity period is 30s for the file attribute cached by the first service in the NAS client; and a minimum validity period is 5s and a maximum validity period is 30s for the file attribute, generated by the first service, cached in the NAS client. The first configuration information further indicates to disable the local cache function when the first service in the NAS client generates the read instruction or the write instruction for the file data. It should be noted that the example in Table 2 is merely for ease of understanding of this solution. Specific information included in the first configuration information may be flexibly determined with reference to an actual use case. This is not limited in embodiments of this application.

In another implementation, the first configuration information further includes time information 1 and time information 2, the time information 1 indicates a validity period for caching to-be-written data in the NAS client when the first service in the NAS client generates a write instruction, and the time information 2 indicates a validity period for reading data from the NAS server and caching the data in the NAS client.

In another implementation, the first configuration information further includes one validity period, and the validity period represents a validity period for caching data of any type in the NAS client and a validity period for reading data of any type from the NAS server and caching the data in the NAS client.

In this embodiment of this application, when a local cache function of a specific service is enabled, a personalized configuration may be further performed on a cache validity period for data in the enabled cache. This further improves local cache management flexibility, helps meet personalized configuration requirements in more aspects for a local cache, and helps improve user viscosity of this solution.

For example, step 201 may include: The NAS server obtains, through a display interface, a configuration operation entered by a user, and determines the at least one piece of configuration information in response to the obtained configuration operation.

Further, in an implementation, each file system of the NAS server corresponds to one piece of configuration information. In this case, step 201 may include: The NAS server obtains, through the display interface, a configuration operation entered by the user for each of at least one file system, and then may determine at least one piece of configuration information in one-to-one correspondence with the at least one file system of the NAS server.

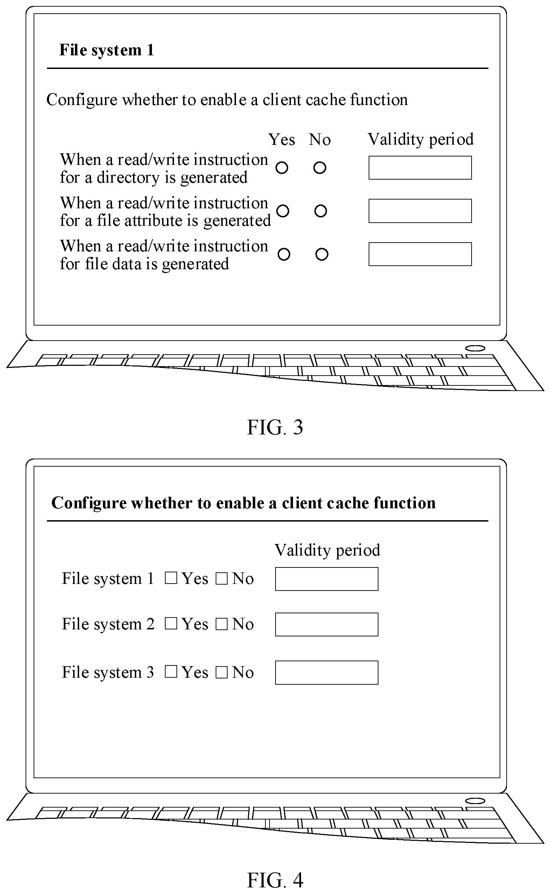

For more intuitive understanding of this solution, refer to FIG. 3 and FIG. 4. FIG. 3 and FIG. 4 are two interface diagrams of obtaining a configuration operation according to an embodiment of this application. First, FIG. 3 shows a receiving interface of a configuration operation that is input for a file system 1. As shown in FIG. 3, the NAS server displays icons corresponding to a directory, a file attribute, and file data through a display interface. By tapping circular icons under "Yes" or "No", the user may configure whether to enable a local cache function when the directory is written into the file system 1 or the directory is read from the file system 1, may also configure whether to enable a local cache function when the file attribute is written into the file system 1 or the file attribute is read from the file system 1, and may also configure whether to enable a local cache function when the file data is written into the file system 1 or the file data is read from the file system 1.

FIG. 3 further shows text boxes corresponding to the directory, the file attribute, and the file data. The text box is used to receive a validity period entered by the user. In a case in which the user configures to enable the local cache function when the directory is written into the file system 1 or the directory is read from the file system 1, the user may further enter, in the text box, a validity period for the directory cached in the NAS client. In a case in which the user configures to enable the local cache function when the file attribute is written into the file system 1 or the file attribute is read from the file system 1, the user may further enter, in the text box, a validity period for the file attribute cached in the NAS client. In a case in which the user configures to enable the local cache function when the file data is written into the file system 1 or the file data is read from the file system 1, the user may further enter, in the text box, a validity period for the file data cached in the NAS client. It should be understood that the example in FIG. 3 is merely for ease of understanding of this solution, and is not intended to limit this solution.

FIG. 4 shows a receiving interface of a configuration operation for a file system 1, a file system 2, and a file system 3. As shown in FIG. 4, that the user enters a configuration operation for the file system 1 through a display interface may include: By tapping a box in front of "Yes" or "No", the user may configure whether to enable a local cache function when data is written into the file system 1 or data is read from the file system 1. In a case in which the user configures to enable the local cache function when the data is written into the file system 1 or the data is read from the file system 1, the user may further enter, in the text box, a validity period for the data cached in the NAS client. For a specific implementation in which the user enters a configuration operation for the file system 2 and a specific implementation in which the user enters a configuration operation for the file system 3, refer to the foregoing description of the "specific implementation in which the user enters the configuration operation for the file system 1". Details are not described herein again. It should be noted that the example descriptions herein with reference to FIG. 3 and FIG. 4 are merely for ease of understanding of this solution. The display interface configured to receive a configuration operation may alternatively be specifically presented in another form. This is not limited in embodiments of this application.

In this embodiment of this application, because the NAS server provides a display interface for a configuration operation used to obtain configuration information, the user may conveniently enter a configuration operation through the display interface, to meet personalized requirements of different services for the local cache. In addition, the user may conveniently perform a personalized configuration on a local cache through the display interface according to an actual requirement of the user. This helps improve user viscosity of this solution.

In another implementation, each of at least one service of the NAS server corresponds to one piece of configuration information. In this case, step 201 may include: The NAS server obtains, through the display interface, a configuration operation entered by the user for each of the at least one service provided by the NAS server, and then may determine at least one piece of configuration information in one-to-one correspondence with the at least one service provided by the NAS server.

It should be noted that the NAS server may alternatively obtain the at least one piece of configuration information in another manner. For example, the NAS server may receive the at least one piece of configuration information sent by another device, and then store the received at least one piece of configuration information. Step 201 may be specifically flexibly determined with reference to an actual use case. This is not limited in this embodiment of this application.

202: The NAS client sends a first query request corresponding to the first service to the NAS server, where a plurality of services are deployed in the NAS client, the first service is any one of at least one service, the first query request is used to obtain configuration information corresponding to the first service, and at least two different services in the plurality of services correspond to different configuration information.

In this embodiment of this application, the plurality of services may be deployed in the NAS client, and the NAS technology is used for each of the plurality of services. For any first service in the plurality of services, the NAS client may send the first query request corresponding to the first service to the NAS server corresponding to the first service. Correspondingly, the NAS server corresponding to the first service may receive the first query request corresponding to the first service and sent by the NAS client in which the first service is deployed. For example, the "NAS server corresponding to the first service" may also be understood as a server configured to provide support for the first service.

A "service" in this application may also be referred to as a "function". For example, the NAS client is specifically a financial application program, and a service that uses the NAS technology and that is included in the financial application program is a transfer service. When a user A makes a transfer to a user B by using the financial application program, a remaining amount of the user A that is stored in a NAS server corresponding to the transfer service needs to be reduced, and a remaining amount of the user B that is stored in the NAS server corresponding to the transfer service needs to be increased.

For another example, the NAS client is specifically an enterprise management application program, a service that uses the NAS technology and that is provided by the enterprise management application program may be an attendance service, and a user C (for example, HR) may upload an employee attendance statistics table by using the attendance service provided by the enterprise management application program. In this case, the attendance statistics table needs to be synchronized to a NAS server corresponding to the attendance service.

For another example, the NAS client is specifically a container, the container runs a service of a mini-program of game D, and the mini-program of game D is based on the NAS technology. When a user uses the mini-program of game D, game progress information of the user is generated, and the game progress information of the user is stored in a NAS server corresponding to the mini-program of game D. The container further runs a service of performing automatic cloud backup on an image. Therefore, after a new image is generated on a device in which the NAS client is located, the image may be stored in a NAS server, and the like. It should be noted that examples of the "NAS client" and the "service" herein are merely for ease of understanding of this solution, and are not intended to limit this solution.

At least two different services in the plurality of services deployed in the NAS client correspond to different configuration information. For example, in all of the plurality of services deployed in the NAS client, some services may correspond to same configuration information, that is, some of the plurality of services may have the same configuration about whether to enable a local cache function, but at least two different services in the plurality of services correspond to different configuration information. For example, a service 1, a service 2, a service 3, and a service 4 are deployed in the NAS client, the service 1 corresponds to configuration information 1, the service 2 corresponds to configuration information 2, the service 3 corresponds to configuration information 3, the service 4 corresponds to configuration information 4, a service 5 corresponds to configuration information 5, the configuration information 1 and the configuration information 2 have different configurations about whether to enable a local cache function, and the configuration information 1, the configuration information 3, and the configuration information 4 may have the same configuration about whether to enable a local cache function. It should be understood that the example herein is merely for ease of understanding of the concept "at least two different services in the plurality of services correspond to different configuration information".

In an implementation, if the plurality of pieces of configuration information in the NAS server are in one-to-one correspondence with the plurality of file systems of the NAS server, before step 202, the NAS client may further determine that the data generated by the first service in the NAS client is stored in the at least one first file system of the NAS server, and then determine the first query request corresponding to the first service. The first query request corresponding to the first service includes identification information of each of the at least one first file system, and the identification information of the at least one first file system included in the first query request indicates to obtain first configuration information in one-to-one correspondence with the at least one first file system, that is, the at least one piece of first configuration information corresponding to the first service includes the first configuration information corresponding to each of the at least one first file system.

For example, the NAS client may store first information, where the first information indicates a file system in which data generated by each of the at least one service deployed in the NAS client is stored in the NAS server. In this case, when determining that the configuration information corresponding to the first service needs to be obtained, the NAS client may first determine, based on the first information, a file system (that is, the at least one first file system) in which the data generated by the first service is stored in the NAS server, and then can determine that the first query request corresponding to the first service carries the identification information of each first file system. For further understanding of this solution, an example in which the at least one service deployed in the NAS client includes a service 1, a service 2, a service 3, and a service 4 is used herein. The first information indicates that data generated by the service 1 is stored in a file system 1 and a file system 2 of the NAS server, data generated by the service 2 is stored in the file system 2 of the NAS server, data generated by the service 3 is stored in a file system 3 of the NAS server, and data generated by the service 4 is stored in the file system 3 and a file system 4 of the NAS server. If the first service is the service 1, after determining the service 1, the NAS client may determine, based on the first information, that the data generated by the service 1 is stored in the file system 1 and the file system 2 of the NAS server, and then can determine that a first query request corresponding to the service 1 includes identification information of the file system 1 and identification information of the file system 2. The identification information of the file system 1 and the identification information of the file system 2 that are included in the first query request indicate the NAS server, the NAS client wants configuration information corresponding to the file system 1 and configuration information corresponding to the file system 2, and configuration information corresponding to the service 1 includes the configuration information corresponding to the file system 1 and the configuration information corresponding to the file system 2. It should be understood that the example herein is merely for ease of understanding, and is not intended to limit this solution.

Because the NAS server is communicatively connected to a plurality of NAS clients, if the NAS server determines, after receiving a query request corresponding to a specific service and sent by a NAS client, a file system in which data generated by the service is stored, the NAS server needs to process a query request from each NAS client, greatly increasing workload of the NAS server. In this embodiment of this application, each NAS client determines a file system in which the data generated by the first service is stored in the NAS server, and includes identification information of the foregoing file system in the query request, so that the NAS server can directly determine, based on the identification information carried in the query request, a file system whose configuration information needs to be fed back to the NAS client. This helps the NAS client obtain configuration information more quickly, that is, helps improve efficiency of an entire procedure.

In another implementation, if the plurality of pieces of configuration information in the NAS server are in one-to-one correspondence with the plurality of file systems of the NAS server, the first query request corresponding to the first service may also include identification information of the first service, and the identification information of the first service included in the first query request indicates the NAS server to determine the at least one first file system corresponding to the first service and then determine the first configuration information of each first file system.

In another implementation, if the plurality of pieces of configuration information in the NAS server are in one-to-one correspondence with the plurality of services provided by the NAS server, optionally, the first query request corresponding to the first service may include identification information of the first service, and the identification information of the first service included in the first query request indicates that the NAS client wants the first configuration information of the first service.

203: The NAS server obtains, in response to the received first query request, the first configuration information corresponding to the first service from the plurality of pieces of pre-stored configuration information.

In this embodiment of this application, after receiving the first query request corresponding to the first service and sent by the NAS client, the NAS server may obtain, in response to the received query request, the at least one piece of first configuration information corresponding to the first service from the plurality of pieces of pre-stored configuration information.

In a case, if the plurality of pieces of pre-stored configuration information in the NAS server are in one-to-one correspondence with the plurality of file systems of the NAS server, step 203 may include: The NAS server obtains, in response to the received query request, the first configuration information corresponding to the first file system from the plurality of pieces of pre-stored configuration information, where the data generated by the first service is stored in at least one first file system of the NAS server, and the plurality of file systems of the NAS server include the at least one first file system.

For example, in an implementation, when the first query request corresponding to the first service includes identification information of each of the at least one first file system, step 203 may include: The NAS server may obtain the first configuration information corresponding to each first file system from the plurality of pieces of pre-stored configuration information based on the identification information of each of the at least one first file system that is included in the first query request, that is, obtains at least one piece of first configuration information corresponding to the first service.

In another implementation, when the first query request corresponding to the first service includes identification information of the first service, second information may be configured in the NAS server, and the second information indicates a file system in which data generated by each of the at least one service provided by the NAS server is stored. In this case, step 203 may include: The NAS server may determine, based on the identification information of the first service and the second information, a first file system in which the data generated by the first service is stored, and then obtain first configuration information corresponding to each first file system, that is, obtain at least one piece of first configuration information corresponding to the first service.

In another case, if the plurality of pieces of pre-stored configuration information in the NAS server are in one-to-one correspondence with the plurality of services provided by the NAS server, and the first query request corresponding to the first service may include identification information of the first service, in step 203, the NAS server may obtain one piece of first configuration information corresponding to the first service from the plurality of pieces of pre-stored configuration information based on the identification information of the first service.

204: The NAS client receives the first configuration information fed back by the NAS server, where the first configuration information indicates whether to enable the local cache function of the first service.

In this embodiment of this application, after obtaining the at least one piece of first configuration information corresponding to the first service, the NAS server may send the at least one piece of first configuration information corresponding to the first service to the NAS client. Correspondingly, the NAS client may receive the at least one piece of first configuration information corresponding to the first service. Each piece of first configuration information corresponding to the first service indicates whether to enable the client cache function of the first service. For specific content of "each piece of first configuration information", refer to the descriptions in step 201. Details are not described herein again.

It should be noted that a relationship between execution frequencies of step 201 and steps 202 to 204 is not limited in this embodiment of this application. For example, after step 201 is performed once, steps 202 to 204 may be performed a plurality of times, that is, after the NAS server obtains the at least one piece of configuration information, the NAS client may obtain the first configuration information corresponding to the first service a plurality of times.

205: The NAS client determines, based on the first configuration information, whether to enable the local cache function of the first service.

In this embodiment of this application, after the NAS client obtains the at least one piece of first configuration information corresponding to the first service, when the first service in the NAS client generates a read instruction/write instruction, the NAS client may determine, based on the at least one piece of first configuration information corresponding to the first service, whether to enable the local cache function of the first service.

For example, in an implementation, when data generated by the first service is stored in at least one first file system of the NAS server, and the at least one piece of first configuration information received by the NAS client includes at least one piece of first configuration information in one-to-one correspondence with the at least one first file system, step 205 may include: When the first service in the NAS client generates a read/write instruction, the NAS client determines that a storage location corresponding to the read/write instruction belongs to one target file system in the at least one first file system; and the NAS client may obtain one piece of target configuration information corresponding to the target file system from the at least one piece of first configuration information in one-to-one correspondence with the at least one first file system, and then may determine, based on the target configuration information, whether to enable the local cache function of the first service, where the target configuration information is configuration information corresponding to the target file system in the at least one piece of first configuration information.

In this embodiment of this application, the NAS server enables/disables a local cache function on the NAS client for data configurations in different file systems, and data generated by each service is stored in a file system managed by the NAS server. Because the data generated by the first service is stored in the first file system, when the NAS client sends the query request corresponding to the first service to the NAS server, the NAS client can obtain configuration information of the first file system, to implement personalized configurations for different services by configuring a local cache function on the NAS client to be enabled/disabled for different file systems. When the first service in the NAS client generates a read/write instruction, a target file system to which a storage location of to-be-read data/to-be-written data belongs is first determined, and then whether to enable the local cache function is determined based on target configuration information corresponding to the target file system. Because file systems are usually managed based on data features, data stored in the same file system has the same feature, so that the data in the same file system usually has the same requirement for enabling/disabling a local cache function, that is, a local cache of the NAS client needs to be enabled when data is read/written in a file system, or a local cache of the NAS client needs to be disabled when data is read/written in a file system. Therefore, whether to enable a local cache function is configured at a file system granularity, which is beneficial for better meeting a personalized configuration requirement for a local cache function.

In another implementation, when one piece of first configuration information received by the NAS client includes one piece of first configuration information in one-to-one correspondence with the first service, step 205 may include: When the first service in the NAS client generates a read/write instruction, the NAS client determines, based on the one piece of first configuration information corresponding to the first service, whether to enable the local cache function of the first service.

Further, if the first configuration information (or the target configuration information) includes the first sub-information, the second sub-information, or the third sub-information, that the NAS client determines, based on the target configuration information (or the one piece of first configuration information corresponding to the first service), whether to enable the local cache function of the first service may include: When the first service in the NAS client generates a read/write instruction for a directory, the NAS client determines, based on the first sub-information, whether to enable the local cache function; when the first service in the NAS client generates a read/write instruction for a file attribute, the NAS client determines, based on the second sub-information, whether to enable the local cache function; or when the first service in the NAS client generates a read/write instruction for file data, the NAS client determines, based on the third sub-information, whether to enable the local cache function.

For example, when the first service in the NAS client generates the read/write instruction for the directory, if the first configuration information indicates to disable the local cache function of the first service, the NAS client may directly send the read instruction for the directory to the NAS server, and then receive the directory sent by the NAS server; or the NAS client may directly send the write instruction for the directory to the NAS server, and then write the directory into the NAS server.

When the first service in the NAS client generates the read/write instruction for the directory, if the first configuration information indicates to enable the local cache function of the first service, and optionally, the first configuration information further indicates a cache validity period for data in the enabled cache, and when the first service in the NAS client generates the read/write instruction for the directory, if the first sub-information indicates to enable the local cache function, the NAS client may further determine, based on the target configuration information (or the one piece of first configuration information corresponding to the first service), a validity period for the directory cached in the NAS client.

Optionally, the NAS client may determine, based on the first time information in the target configuration information (or the one piece of first configuration information corresponding to the first service), the validity period for the directory cached in the NAS client.

Further, if the first service in the NAS client generates the read instruction for the directory, the NAS client may obtain actual cache duration of the directory cached in the NAS client, and determine whether the actual cache duration is within the foregoing validity period; and if yes, that is, the directory cached in the NAS client is valid, may read the directory from data cached in the NAS client; or if not, that is, the directory cached in the NAS client is invalid, may send the read instruction for the directory to the NAS server, then receive the directory sent by the NAS server, and cache the directory sent by the NAS server in the NAS client.

If the first service in the NAS client generates the write instruction for the directory, the NAS client may first cache the generated directory in the NAS client, and send the directory that needs to be written into the NAS server to the NAS server within the foregoing validity period, to store the directory in the NAS server within the validity period.

It should be noted that, for a specific processing manner of "when the first service in the NAS client generates a read/write instruction for a file attribute", refer to the foregoing descriptions of "when the first service in the NAS client generates a read/write instruction for a directory". A difference lies in that "directory" in the foregoing descriptions is replaced with "file attribute". For a specific processing manner of "when the first service in the NAS client generates a read/write instruction for file data", refer to the foregoing descriptions of "when the first service in the NAS client generates a read/write instruction for a directory". A difference lies in that "directory" in the foregoing descriptions is replaced with "file data". Details are not described herein again.

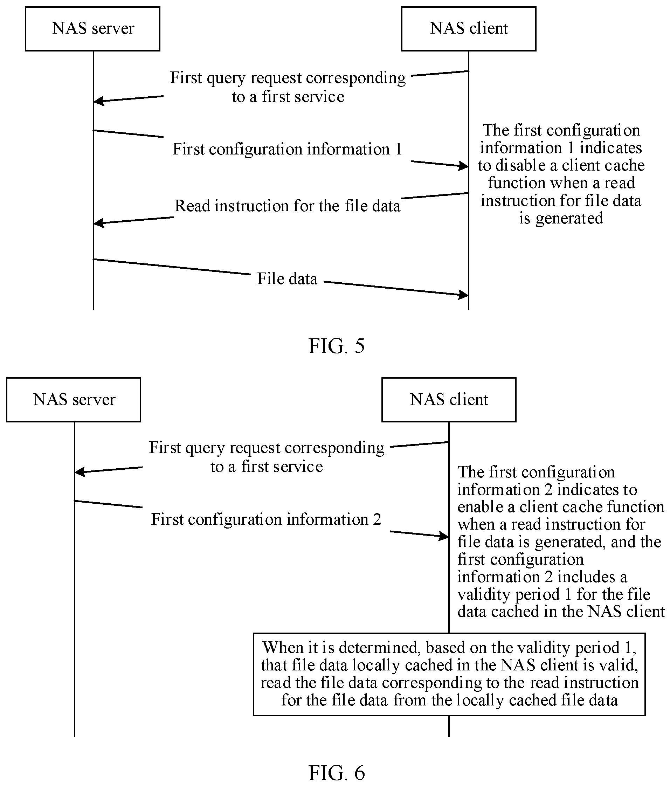

For more intuitive understanding of this solution, refer to FIG. 5 and FIG. 6. FIG. 5 and FIG. 6 are two schematic flowcharts of a cache enablement management method for NAS according to an embodiment of this application. First, in FIG. 5, an example in which a first service in a NAS client generates a read instruction for file data is used. As shown in FIG. 5, the NAS client may send a first query request corresponding to the first service to a NAS server. The NAS server returns first configuration information 1 corresponding to the first service to the NAS client, where the first configuration information 1 indicates to disable a local cache function when the first service in the NAS client generates the read instruction for the file data. When the first service in the NAS client generates the read instruction for the file data, the read instruction for the file data is directly sent to the NAS server, where the read instruction for the file data may include a directory of the file data. The NAS server sends the file data to the NAS client in response to the received read instruction for the file data.

In FIG. 6, an example in which a first service in a NAS client generates a read instruction for file data is used. As shown in FIG. 6, the NAS client may send a first query request corresponding to the first service to a NAS server. The NAS server returns first configuration information 2 corresponding to the first service to the NAS client, where the first configuration information 2 indicates to enable a local cache function when the first service in the NAS client generates the read instruction for the file data, and the first configuration information 2 includes a validity period 1 for the file data cached in the NAS client. When the first service in the NAS client generates the read instruction for the file data, if it is determined, based on the validity period 1, that file data locally cached by the NAS client is valid, the file data corresponding to the read instruction is read from the locally cached file data. It should be noted that the examples in FIG. 5 and FIG. 6 are merely for ease of understanding of this solution, and are not intended to limit this solution.

It should be noted that a relationship between execution frequencies of steps 202 to 204 and step 205 is not limited in this embodiment of this application. For example, after steps 202 to 204 are performed once, step 205 may be performed a plurality of times, that is, after the NAS client obtains the first configuration information corresponding to the first service once, the NAS client may determine, a plurality of times based on the obtained first configuration information, whether to enable the local cache function; or steps 202 to 204 may be performed once each time before step 205 is performed, which may be specifically flexibly determined with reference to an actual use case. This is not limited in this embodiment of this application.

When the plurality of services are deployed in the NAS client, if the NAS client lacks a configuration item for a local cache function, the plurality of services in the NAS client can share only one piece of default configuration information on the NAS client, making it impossible to meet personalized configuration requirements for the local cache function corresponding to different services. However, in this embodiment of this application, the NAS client performs a personalized configuration according to a specific requirement of a service, and separately enables/disables a local cache function for different services, to meet personalized requirements of different services. Specifically, the NAS server records requirements of different services on whether to enable a cache, and the NAS client obtains the requirements by sending a query request to the NAS server, and then starts (or does not start) a local cache of the client for a specific service based on this indication.

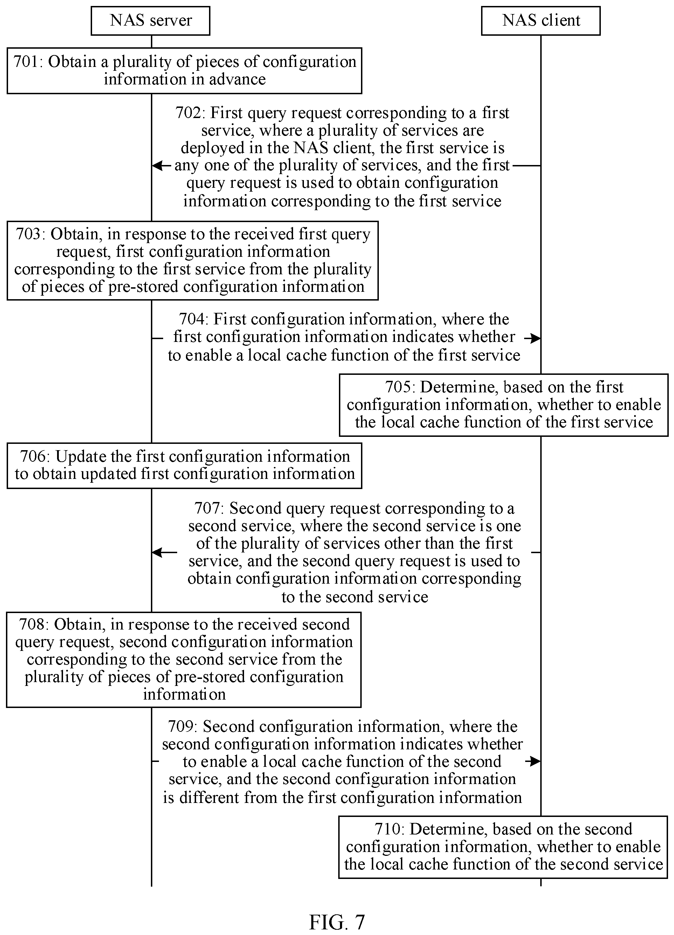

Optionally, the first configuration information is updatable, and an update operation of the first configuration information is performed by the NAS server. Specifically, based on the embodiment corresponding to FIG. 2, FIG. 7 is another schematic flowchart of a cache enablement management method for NAS according to an embodiment of this application. The cache enablement management method for NAS provided in this embodiment of this application may include the following steps.

701: A NAS server obtains at least one piece of configuration information in advance.

702: A NAS client sends a first query request corresponding to a first service to the NAS server, where at least one service is deployed in the NAS client, the first service is any one of the at least one service, and the first query request is used to obtain configuration information corresponding to the first service.

703: The NAS server obtains, in response to the received first query request, first configuration information corresponding to the first service from a plurality of pieces of pre-stored configuration information.

704: The NAS client receives the first configuration information fed back by the NAS server, where the first configuration information indicates whether to enable a local cache function of the first service.

705: The NAS client determines, based on the first configuration information, whether to enable the local cache function of the first service.

In this embodiment of this application, for specific implementations of steps 701 to 705, refer to the descriptions in the embodiment corresponding to FIG. 2. Details are not described herein again.

706: The NAS server updates the first configuration information to obtain updated first configuration information.

In this embodiment of this application, step 706 is an optional step. Optionally, step 706 may include: The NAS server obtains, through a display interface, a modification operation entered by a user for the first configuration information, and updates the first configuration information in response to the obtained modification operation, to obtain the updated first configuration information.

The foregoing modification operation may include: changing from enabling the local cache function to disabling the local cache function, or changing from disabling the local cache function to enabling the local cache function. For example, the foregoing modification operation may include at least one of the following: when a read/write instruction for a directory is generated, changing from enabling the local cache function to disabling the local cache function; when a read/write instruction for a directory is generated, changing from disabling the local cache function to enabling the local cache function; when a read/write instruction for a file attribute is generated, changing from enabling the local cache function to disabling the local cache function; when a read/write instruction for a file attribute is generated, changing from disabling the local cache function to enabling the local cache function; when a read/write instruction for file data is generated, changing from enabling the local cache function to disabling the local cache function; when a read/write instruction for file data is generated, changing from disabling the local cache function to enabling the local cache function; or another modification operation.

Optionally, the foregoing modification operation may alternatively include a modification operation on a validity period. For example, the foregoing modification operation may alternatively include at least one of the following: a modification operation on a validity period for a directory cached in the NAS client, a modification operation on a validity period for a file attribute cached in the NAS client, a modification operation on a validity period for file data cached in the NAS client, or another modification operation.

For example, in a case, if each of at least one piece of first configuration information corresponding to the first service is configuration information corresponding to each first file system of the NAS server, and data generated by the first service is stored in at least one first file system of the NAS server, step 706 may include: The NAS server obtains, through the display interface, a modification operation entered by the user for configuration information of any one of the at least one first file system, that is, the NAS server obtains, through the display interface, a modification operation performed by the user for any one of the at least one piece of first configuration information. The NAS server updates the first configuration information in response to the obtained modification operation, to obtain the updated first configuration information.

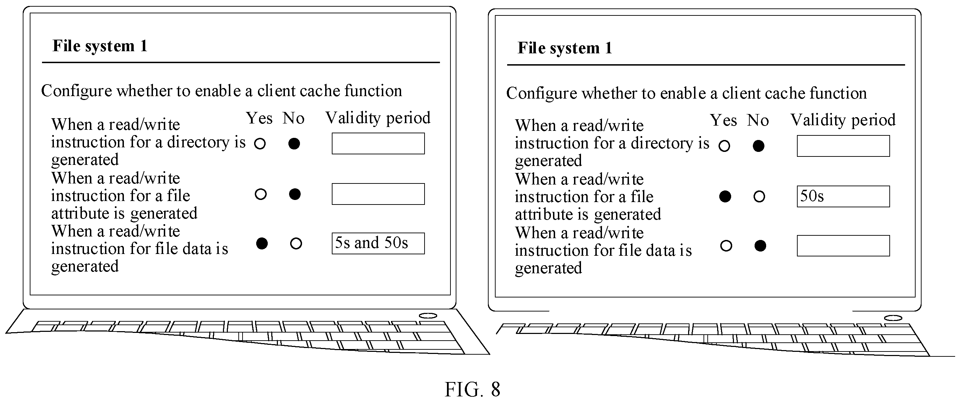

For more intuitive understanding of this solution, an example in which the first service is a service 1 and data generated by the service 1 is stored in a file system 1 and a file system 2 of the NAS server is used herein. A modification operation that is entered by the user for configuration information of the file system 1 and that is obtained by the NAS server through a display interface is shown with reference to FIG. 8. FIG. 8 is a diagram of obtaining a modification operation for first configuration information according to an embodiment of this application. FIG. 8 includes two sub-diagrams: a left sub-diagram and a right sub-diagram. The left sub-diagram in FIG. 8 represents unmodified configuration information of the file system 1, and the right sub-diagram in FIG. 8 represents modified configuration information of the file system 1. It can be learned from comparison of the left sub-diagram and the right sub-diagram in FIG. 8 that the modification operation includes: when a read/write instruction for a file attribute is generated, changing from disabling the local cache function to enabling the local cache function, and setting a validity period for the file attribute cached of the NAS client to 50s; or when a read/write instruction for file data is generated, changing from enabling the local cache function to disabling the local cache function. It should be understood that the example in FIG. 8 is merely for ease of understanding of this solution, and is not intended to limit this solution.

In another case, if the plurality of pieces of pre-stored configuration information in the NAS server are in one-to-one correspondence with at least one service provided by the NAS server, step 706 may include: The NAS server obtains, through the display interface in response to the obtained modification operation, a modification operation of the user for the configuration information of the first service, and updates the first configuration information, to obtain the updated first configuration information.

In a process of using a specific service, a requirement of data generated by a service for whether to enable a local cache function may change. In this embodiment of this application, configuration information corresponding to a specific service may be further modified by using the NAS server. This helps further improve cache management flexibility, and also helps better meet a personalized configuration requirement for a local cache function.

It should be noted that the NAS server may alternatively obtain the updated first configuration information in another manner. For example, the NAS server may receive the updated first configuration information sent by another device, then store the received updated first configuration information, and the like. Step 706 may be specifically flexibly determined with reference to an actual use case. This is not limited in this embodiment of this application.

It should be understood that the NAS server may modify any piece of pre-stored configuration information in the foregoing manner, that is, obtain updated configuration information corresponding to any one of the plurality of pieces of pre-stored configuration information.

It should be noted that a sequence of step 706 and steps 702 to 706 is not limited in this embodiment of this application. For example, if step 706 may be performed before step 702, in step 704, the NAS client obtains the updated first configuration information corresponding to the first service. For another example, if step 706 is performed after step 705, the NAS client may perform steps 702 to 704 again after step 706, to obtain the updated first configuration information again. This may be specifically determined with reference to an actual use case. This is not limited in this embodiment of this application.

707: The NAS client sends a second query request corresponding to a second service to the NAS server, where the second service is one of the plurality of services other than the first service, and the second query request is used to obtain configuration information corresponding to the second service.

708: The NAS server obtains, in response to the received second query request, second configuration information corresponding to the second service from the plurality of pieces of pre-stored configuration information.

709: The NAS client receives the second configuration information fed back by the NAS server, where the second configuration information indicates whether to enable a local cache function of the second service, and the second configuration information is different from the first configuration information.

710: The NAS client determines, based on the second configuration information, whether to enable the local cache function of the second service.

In this embodiment of this application, steps 707 to 710 are optional steps. If steps 707 to 710 are performed, for a specific implementation of steps 707 to 710, refer to the descriptions of steps 202 to 205 in the embodiment corresponding to FIG. 2. A difference lies in that "first service" in the descriptions of steps 202 to 205 is replaced with "second service", "first query request" in the descriptions of steps 202 to 205 is replaced with "second query request", and "first configuration information" in the descriptions of steps 202 to 205 is replaced with "second configuration information". Details are not described herein again.

A meaning of the "second service" is similar to that of the "first service", but the second service and the first service are different services. A meaning of the "second query request" is similar to that of the "first query request". A meaning of the "second configuration information" is similar to that of the "first configuration information", but the second configuration information is different from the first configuration information.

Optionally, the first configuration information specifically indicates to enable the local cache function of the first service, and the second configuration information specifically indicates not to enable the local cache function of the second service. For example, when the first service in the NAS client generates a read/write instruction, the NAS client determines, based on the first configuration information fed back by the NAS server, to enable the local cache function, and then may determine how to use the local cache function of the first service. When the second service in the NAS client generates a read/write instruction, the NAS client determines, based on the second configuration information fed back by the NAS server, to disable the local cache function, and then may determine how to implement a data read/write operation when the local cache function is not used.

In this embodiment of this application, the NAS client can obtain not only the first configuration information corresponding to the first service, but also the second configuration information corresponding to the second service. The second configuration information is different from the first configuration information. To be specific, the first configuration information indicates to enable the local cache function of the first service, and the second configuration information indicates not to enable the local cache function of the second service. This further clarifies that a local cache function can be enabled/disabled for different services through personalized configurations, to meet personalized requirements of different services.

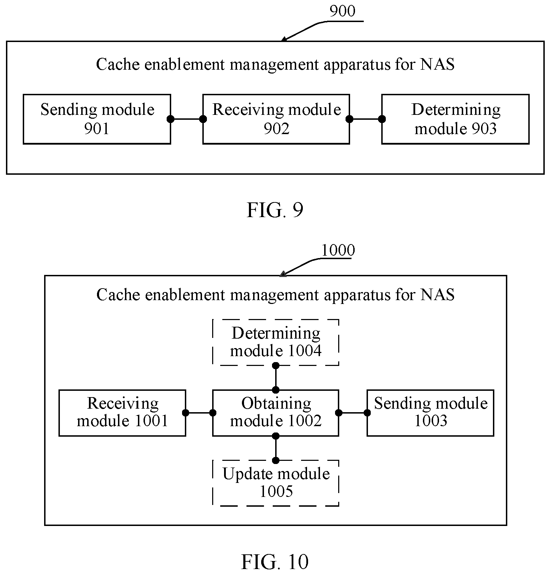

The foregoing describes in detail the cache enablement management methods for NAS provided in embodiments of this application. The following describes cache enablement management apparatuses for NAS provided in embodiments of this application. FIG. 9 is a diagram of a structure of a cache enablement management apparatus for NAS according to an embodiment of this application. The cache enablement management apparatus 900 for NAS is deployed in a NAS client, and the cache enablement management apparatus 900 for NAS includes: a sending module 901, configured to send a first query request corresponding to a first service to a NAS server, where a plurality of services are deployed in the NAS client, the first service is any one of the plurality of services, the first query request is used to obtain configuration information corresponding to the first service, and at least two different services in the plurality of services correspond to different configuration information; a receiving module 902, configured to receive first configuration information fed back by the NAS server, where the first configuration information indicates whether to enable a local cache function of the first service; and a determining module 903, configured to determine, based on the first configuration information, whether to enable the local cache function of the first service.

Optionally, the first configuration information specifically indicates to enable the local cache function of the first service, and the sending module 901 is further configured to send a second query request corresponding to a second service to the NAS server, where the second service is one of the plurality of services other than the first service, and the second query request is used to obtain configuration information corresponding to the second service; the receiving module 902 is further configured to receive second configuration information fed back by the NAS server, where the second configuration information indicates not to enable a local cache function of the second service, and the second configuration information is different from the first configuration information; and the determining module 903 is further configured to determine, based on the second configuration information, not to enable the local cache function of the second service.

Optionally, when data generated by the first service is stored in at least one first file system of the NAS server, and the received first configuration information includes at least one piece of first configuration information in one-to-one correspondence with the at least one first file system, the determining module 903 is specifically configured to determine, based on target configuration information, whether to enable the local cache function of the first service, where the target configuration information is configuration information corresponding to a target file system in the at least one piece of first configuration information, the at least one first file system includes the target file system, and the target file system is a file system to which a storage location corresponding to a read/write instruction generated by the first service in the NAS client belongs.

Optionally, the determining module 903 is further configured to determine that the data generated by the first service in the NAS client is stored in the first file system of the NAS server, where the first query request corresponding to the first service includes identification information of the first file system, and the identification information of the first file system in the query request indicates to obtain the first configuration information corresponding to the first file system.

Optionally, the first configuration information is updatable, and an update operation of the first configuration information is performed by the NAS server.

Optionally, the first configuration information includes at least one of the following: first sub-information, where the first sub-information indicates whether to enable the local cache function when the first service in the NAS client generates a read/write instruction for a directory; second sub-information, where the second sub-information indicates whether to enable the local cache function when the first service in the NAS client generates a read/write instruction for a file attribute; and third sub-information, where the third sub-information indicates whether to enable the local cache function when the first service in the NAS client generates a read/write instruction for file data.

Optionally, when the first configuration information indicates to enable the local cache function of the first service, the first configuration information further indicates a cache validity period for data in the enabled cache.

It should be noted that information exchange between the modules/units of the foregoing apparatus, an implementation process, and other content are based on the same concept as the method embodiment of this application, and bring same technical effects as those of the method embodiment of this application. For specific content, refer to the foregoing descriptions in the method embodiment of embodiments of this application. Details are not described herein again.

FIG. 10 is another diagram of a structure of a cache enablement management apparatus for NAS according to an embodiment of this application. The cache enablement management apparatus 1000 for NAS is deployed in a NAS server, and the cache enablement management apparatus 1000 for NAS includes: a receiving module 1001, configured to receive a first query request corresponding to a first service and sent by a NAS client, where the first query request is used to obtain configuration information corresponding to the first service; an obtaining module 1002, configured to obtain, in response to the received first query request, first configuration information corresponding to the first service from a plurality of pieces of pre-stored configuration information; and a sending module 1003, configured to send the first configuration information to the NAS client, where the first configuration information indicates whether to enable a local cache function of the first service.

Optionally, the receiving module 1001 is further configured to receive a second query request corresponding to a second service and sent by the NAS client, where the second query request is used to obtain configuration information corresponding to the second service, a plurality of services are deployed in the NAS client, the first service is any one of the plurality of services, and the second service is one of the plurality of services other than the first service; the obtaining module 1002 is further configured to obtain, in response to the received second query request, second configuration information corresponding to the second service from the plurality of pieces of pre-stored configuration information; and the sending module 1003 is further configured to send the second configuration information to the NAS client, where the second configuration information indicates whether to enable a local cache function of the second service, and the second configuration information is different from the first configuration information.

Optionally, when the plurality of pieces of configuration information are in one-to-one correspondence with a plurality of file systems of the NAS server, the obtaining module 1002 is specifically configured to obtain, in response to the received first query request, the first configuration information corresponding to a first file system from the plurality of pieces of pre-stored configuration information, where data generated by the first service is stored in the first file system, and the plurality of file systems include the first file system.

Optionally, the first query request corresponding to the first service includes identification information of the first file system, and the obtaining module 1002 is specifically configured to obtain the first configuration information corresponding to the first file system from at least one piece of pre-stored configuration information based on the identification information of the first file system in the first query request.

Optionally, the obtaining module 1002 is further configured to obtain a configuration operation through a display interface. The cache enablement management apparatus 1000 for NAS further includes a determining module 1004, configured to determine the plurality of pieces of configuration information in response to the obtained configuration operation.

Optionally, the obtaining module 1002 is further configured to obtain a modification operation through the display interface. The cache enablement management apparatus 1000 for NAS further includes an update module 1005, configured to update the first configuration information in response to the obtained modification operation, to obtain updated first configuration information.

Optionally, the first configuration information includes at least one of the following: first sub-information, where the first sub-information indicates whether to enable the local cache function when the first service in the NAS client generates a read/write instruction for a directory; second sub-information, where the second sub-information indicates whether to enable the local cache function when the first service in the NAS client generates a read/write instruction for a file attribute; and third sub-information, where the third sub-information indicates whether to enable the local cache function when the first service in the NAS client generates a read/write instruction for file data.

Optionally, when the first configuration information indicates to enable the local cache function of the first service, the first configuration information further indicates a cache validity period for data in the enabled cache.

It should be noted that information exchange between the modules/units of the foregoing apparatus, an implementation process, and other content are based on the same concept as the method embodiment of this application, and bring same technical effects as those of the method embodiment of this application. For specific content, refer to the foregoing descriptions in the method embodiment of embodiments of this application. Details are not described herein again.

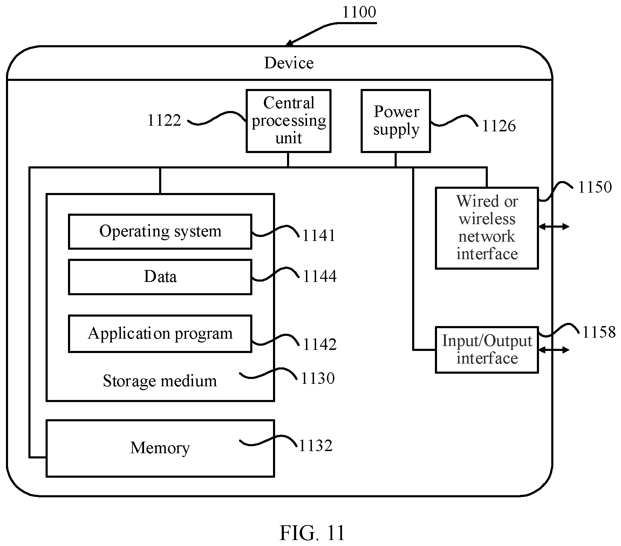

The following describes a device provided in an embodiment of this application. FIG. 11 is a diagram of another structure of a device according to an embodiment of this application. Specifically, the device 1100 is implemented by one or more servers. The device 1100 may vary greatly with a configuration or performance, and may include one or more central processing units (central processing units, CPU) 1122 (for example, one or more processors), a memory 1132, and one or more storage media 1130 (for example, one or more mass storage devices) that store an application program 1142 or data 1144. The memory 1132 and the storage medium 1130 may be used for ephemeral storage or persistent storage. A program stored in the storage medium 1130 may include one or more modules (not shown in the figure), and each module may include a series of instruction operations performed on the device. Further, the central processing unit 1122 may be configured to communicate with the storage medium 1130, to execute, on the device 1100, the series of instruction operations in the storage medium 1130.

The device 1100 may further include one or more power supplies 1126, one or more wired or wireless network interfaces 1150, one or more input/output interfaces 1158, and/or one or more operating systems 1141, for example, Windows ServerTM, Mac OS XTM, UnixTM, LinuxTM, and FreeBSDTM.

In this embodiment of this application, the central processing unit 1122 is configured to perform the cache enablement management method for NAS performed by the NAS server in the embodiments corresponding to FIG. 2 to FIG. 8. It should be noted that a specific manner in which the central processing unit 1122 performs the foregoing steps is based on the same concept as the method embodiments corresponding to FIG. 2 to FIG. 8 in this application, and technical effects are the same as those in the method embodiments corresponding to FIG. 2 to FIG. 8 in this application. For specific content, refer to the descriptions in the foregoing method embodiments of this application. Details are not described herein again.

An embodiment of this application further provides a cache enablement management system for NAS. The cache enablement management system for NAS includes a NAS client and a NAS server, the cache enablement management apparatus 900 for NAS shown in FIG. 9 is deployed in the NAS client, and the cache enablement management apparatus 1000 for NAS shown in FIG. 9 is deployed in the NAS server.

An embodiment of this application further provides a computer-readable storage medium. The computer-readable storage medium stores a program, and when the program is run on a computer, the computer is enabled to perform the steps performed by the NAS client in the methods described in the embodiments shown in FIG. 2 to FIG. 8, or the computer is enabled to perform the steps performed by the NAS server in the methods described in the embodiments shown in FIG. 2 to FIG. 8.

An embodiment of this application further provides a computer program product. The computer program product includes a program, and when the program is run on a computer, the computer is enabled to perform the steps performed by the NAS client in the methods described in the embodiments shown in FIG. 2 to FIG. 8, or the computer is enabled to perform the steps performed by the NAS server in the methods described in the embodiments shown in FIG. 2 to FIG. 8.

The processor mentioned anywhere above may be a general-purpose central processing unit, a microprocessor, an ASIC, or one or more integrated circuits for controlling program execution of the method according to the first aspect.

In addition, it should be noted that the described apparatus embodiments are merely examples. The units described as separate components may or may not be physically separate, and components displayed as units may or may not be physical units, that is, may be located in one place, or may be distributed on a plurality of network units. Some or all the modules may be selected according to actual needs to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary general-purpose hardware, or by special-purpose hardware, including an application-specific integrated circuit, a special-purpose CPU, a special-purpose memory, a special-purpose component, and the like. Generally, any functions that can be completed by a computer program can be easily implemented by using corresponding hardware. In addition, a specific hardware structure for implementing the same function may be in various forms, for example, in a form of an analog circuit, a digital circuit, or a special-purpose circuit. However, in this application, a software program implementation is a better implementation in most cases. Based on such an understanding, the technical solutions of this application essentially or the part contributing to the conventional technology may be implemented in a form of a software product. The computer software product is stored in a readable storage medium, for example, a floppy disk of a computer, a USB flash drive, a removable hard disk, a ROM, a RAM, a magnetic disk, or a compact disc, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used for implementation, all or some of embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a special-purpose computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

## Claims

1. A cache enablement management method for network attached storage NAS, wherein the method comprises:
sending, by a NAS client, a first query request corresponding to a first service to a NAS server, wherein a plurality of services are deployed in the NAS client, the first service is any one of the plurality of services, the first query request is used to obtain configuration information corresponding to the first service, and at least two different services in the plurality of services correspond to different configuration information;
receiving, by the NAS client, first configuration information fed back by the NAS server, wherein the first configuration information indicates whether to enable a local cache function of the first service; and
determining, by the NAS client based on the first configuration information, whether to enable the local cache function of the first service.

2. The method according to claim 1, wherein the first configuration information specifically indicates to enable the local cache function of the first service, and the method further comprises:
sending, by the NAS client, a second query request corresponding to a second service to the NAS server, wherein the second service is one of the plurality of services other than the first service, and the second query request is used to obtain configuration information corresponding to the second service;
receiving, by the NAS client, second configuration information fed back by the NAS server, wherein the second configuration information indicates not to enable a local cache function of the second service, and the second configuration information is different from the first configuration information; and
determining, by the NAS client based on the second configuration information, not to enable the local cache function of the second service.

3. The method according to claim 1 or 2, wherein when data generated by the first service is stored in at least one first file system of the NAS server, and the received first configuration information comprises at least one piece of first configuration information in one-to-one correspondence with the at least one first file system, determining, based on the first configuration information, whether to enable the local cache function of the first service comprises:
determining, based on target configuration information, whether to enable the local cache function of the first service, wherein the target configuration information is configuration information corresponding to a target file system in the at least one piece of first configuration information, the at least one first file system comprises the target file system, and the target file system is a file system to which a storage location corresponding to a read/write instruction generated by the first service in the NAS client belongs.

4. The method according to claim 3, wherein the method further comprises:
determining that the data generated by the first service in the NAS client is stored in the first file system of the NAS server, wherein the first query request corresponding to the first service comprises identification information of the first file system, and the identification information of the first file system in the query request indicates to obtain the first configuration information corresponding to the first file system.

5. The method according to claim 1 or 2, wherein the first configuration information is updatable, and an update operation of the first configuration information is performed by the NAS server.

6. The method according to claim 1 or 2, wherein the first configuration information comprises at least one of the following:
first sub-information, wherein the first sub-information indicates whether to enable the local cache function when the first service in the NAS client generates a read/write instruction for a directory;
second sub-information, wherein the second sub-information indicates whether to enable the local cache function when the first service in the NAS client generates a read/write instruction for a file attribute; and
third sub-information, wherein the third sub-information indicates whether to enable the local cache function when the first service in the NAS client generates a read/write instruction for file data.

7. The method according to claim 1 or 2, wherein when the first configuration information indicates to enable the local cache function of the first service, the first configuration information further indicates a cache validity period for data in the enabled cache.

8. The method according to claim 1 or 2, wherein the method further comprises:
receiving, by the NAS server, the first query request corresponding to the first service and sent by the NAS client, wherein the first query request is used to obtain the configuration information corresponding to the first service;
obtaining, by the NAS server in response to the received first query request, the first configuration information corresponding to the first service from a plurality of pieces of pre-stored configuration information; and
sending, by the NAS server, the first configuration information to the NAS client, wherein the first configuration information indicates whether to enable the local cache function of the first service.

9. A cache enablement management method for network attached storage NAS, wherein the method comprises:
receiving, by a NAS server, a first query request corresponding to a first service and sent by a NAS client, wherein the first query request is used to obtain configuration information corresponding to the first service;
obtaining, by the NAS server in response to the received first query request, first configuration information corresponding to the first service from a plurality of pieces of pre-stored configuration information; and
sending, by the NAS server, the first configuration information to the NAS client, wherein the first configuration information indicates whether to enable a local cache function of the first service.

10. The method according to claim 9, wherein the method further comprises:
receiving, by the NAS server, a second query request corresponding to a second service and sent by the NAS client, wherein the second query request is used to obtain configuration information corresponding to the second service, a plurality of services are deployed in the NAS client, the first service is any one of the plurality of services, and the second service is one of the plurality of services other than the first service;
obtaining, by the NAS server in response to the received second query request, second configuration information corresponding to the second service from the plurality of pieces of pre-stored configuration information; and
sending, by the NAS server, the second configuration information to the NAS client, wherein the second configuration information indicates whether to enable a local cache function of the second service, and the second configuration information is different from the first configuration information.

11. The method according to claim 9 or 10, wherein when the plurality of pieces of configuration information are in one-to-one correspondence with a plurality of file systems of the NAS server, obtaining, in response to the received query request, the first configuration information corresponding to the first service from the plurality of pieces of pre-stored configuration information comprises:
obtaining, in response to the received first query request, the first configuration information corresponding to a first file system from the plurality of pieces of pre-stored configuration information, wherein data generated by the first service is stored in the first file system, and the plurality of file systems comprise the first file system.

12. The method according to claim 11, wherein the first query request corresponding to the first service comprises identification information of the first file system, and obtaining, in response to the received first query request, the first configuration information corresponding to the first service from the plurality of pieces of pre-stored configuration information comprises:
obtaining, based on the identification information of the first file system in the first query request, the first configuration information corresponding to the first file system from the plurality of pieces of pre-stored configuration information.

13. The method according to claim 9 or 10, wherein the method further comprises:
obtaining a configuration operation through a display interface; and
determining, in response to the obtained configuration operation, the plurality of pieces of configuration information.

14. The method according to claim 13, wherein the method further comprises:
obtaining a modification operation through the display interface; and
updating, in response to the obtained modification operation, the first configuration information to obtain updated first configuration information.

15. The method according to claim 9 or 10, wherein the first configuration information comprises at least one of the following:
first sub-information, wherein the first sub-information indicates whether to enable the local cache function when the first service in the NAS client generates a read/write instruction for a directory;
second sub-information, wherein the second sub-information indicates whether to enable the local cache function when the first service in the NAS client generates a read/write instruction for a file attribute; and
third sub-information, wherein the third sub-information indicates whether to enable the local cache function when the first service in the NAS client generates a read/write instruction for file data.

16. A cache enablement management apparatus for network attached storage NAS, wherein the cache enablement management apparatus for NAS is deployed in a NAS client, and the apparatus comprises:
a sending module, configured to send a first query request corresponding to a first service to a NAS server, wherein a plurality of services are deployed in the NAS client, the first service is any one of the plurality of services, the first query request is used to obtain configuration information corresponding to the first service, and at least two different services in the plurality of services correspond to different configuration information;
a receiving module, configured to receive first configuration information fed back by the NAS server, wherein the first configuration information indicates whether to enable a local cache function of the first service; and
a determining module, configured to determine, based on the first configuration information, whether to enable the local cache function of the first service.

17. The apparatus according to claim 16, wherein the first configuration information specifically indicates to enable the local cache function of the first service;
the sending module is further configured to send a second query request corresponding to a second service to the NAS server, wherein the second service is one of the plurality of services other than the first service, and the second query request is used to obtain configuration information corresponding to the second service;
the receiving module is further configured to receive second configuration information fed back by the NAS server, wherein the second configuration information indicates not to enable a local cache function of the second service, and the second configuration information is different from the first configuration information; and
the determining module is further configured to determine, based on the second configuration information, not to enable the local cache function of the second service.

18. The apparatus according to claim 16 or 17, wherein when data generated by the first service is stored in at least one first file system of the NAS server, and the received first configuration information comprises at least one piece of first configuration information in one-to-one correspondence with the at least one first file system, the determining module is specifically configured to determine, based on target configuration information, whether to enable the local cache function of the first service, wherein the target configuration information is configuration information corresponding to a target file system in the at least one piece of first configuration information, the at least one first file system comprises the target file system, and the target file system is a file system to which a storage location corresponding to a read/write instruction generated by the first service in the NAS client belongs.

19. The apparatus according to claim 18, wherein
the determining module is further configured to determine that the data generated by the first service in the NAS client is stored in the first file system of the NAS server, wherein the first query request corresponding to the first service comprises identification information of the first file system, and the identification information of the first file system in the query request indicates to obtain the first configuration information corresponding to the first file system.

20. The apparatus according to claim 16 or 17, wherein the first configuration information comprises at least one of the following:
first sub-information, wherein the first sub-information indicates whether to enable the local cache function when the first service in the NAS client generates a read/write instruction for a directory;
second sub-information, wherein the second sub-information indicates whether to enable the local cache function when the first service in the NAS client generates a read/write instruction for a file attribute; and
third sub-information, wherein the third sub-information indicates whether to enable the local cache function when the first service in the NAS client generates a read/write instruction for file data.

21. A cache enablement management apparatus for network attached storage NAS, wherein the cache enablement management apparatus for NAS is deployed in a NAS server, and the apparatus comprises:
a receiving module, configured to receive a first query request corresponding to a first service and sent by a NAS client, wherein the first query request is used to obtain configuration information corresponding to the first service;
an obtaining module, configured to obtain, in response to the received first query request, first configuration information corresponding to the first service from a plurality of pieces of pre-stored configuration information; and
a sending module, configured to send the first configuration information to the NAS client, wherein the first configuration information indicates whether to enable a local cache function of the first service.

22. The apparatus according to claim 21, wherein
the receiving module is further configured to receive a second query request corresponding to a second service and sent by the NAS client, wherein the second query request is used to obtain configuration information corresponding to the second service, a plurality of services are deployed in the NAS client, the first service is any one of the plurality of services, and the second service is one of the plurality of services other than the first service;
the obtaining module is further configured to obtain, in response to the received second query request, second configuration information corresponding to the second service from the plurality of pieces of pre-stored configuration information; and
the sending module is further configured to send the second configuration information to the NAS client, wherein the second configuration information indicates whether to enable a local cache function of the second service, and the second configuration information is different from the first configuration information.

23. The apparatus according to claim 21 or 22, wherein when the plurality of pieces of configuration information are in one-to-one correspondence with a plurality of file systems of the NAS server, the obtaining module is specifically configured to obtain, in response to the received first query request, the first configuration information corresponding to a first file system from the plurality of pieces of pre-stored configuration information, wherein data generated by the first service is stored in the first file system, and the plurality of file systems comprise the first file system.

24. The apparatus according to claim 23, wherein the first query request corresponding to the first service comprises identification information of the first file system, and the obtaining module is specifically configured to obtain the first configuration information corresponding to the first file system from the plurality of pieces of pre-stored configuration information based on the identification information of the first file system in the first query request.

25. The apparatus according to claim 21 or 22, wherein
the obtaining module is further configured to obtain a configuration operation through a display interface; and
the apparatus further comprises a determining module, configured to determine the plurality of pieces of configuration information in response to the obtained configuration operation.

26. The apparatus according to claim 25, wherein
the obtaining module is further configured to obtain a modification operation through the display interface; and
the apparatus further comprises an update module, configured to update the first configuration information in response to the obtained modification operation, to obtain updated first configuration information.

27. The apparatus according to claim 21 or 22, wherein the first configuration information comprises at least one of the following:
first sub-information, wherein the first sub-information indicates whether to enable the local cache function when the first service in the NAS client generates a read/write instruction for a directory;
second sub-information, wherein the second sub-information indicates whether to enable the local cache function when the first service in the NAS client generates a read/write instruction for a file attribute; and
third sub-information, wherein the third sub-information indicates whether to enable the local cache function when the first service in the NAS client generates a read/write instruction for file data.

28. A cache enablement management system for network attached storage NAS, wherein the system comprises a NAS client and a NAS server, the cache enablement management apparatus for NAS according to any one of claims 16 to 20 is deployed in the NAS client, and the cache enablement management apparatus for NAS according to any one of claims 21 to 27 is deployed in the NAS server.

29. A device, wherein the device comprises a processor and a memory, wherein
the memory is configured to store instructions; and
the processor is configured to run the instructions to cause the device to perform the method according to any one of claims 1 to 15.

30. A computer storage medium, wherein the computer storage medium stores one or more instructions, and when the instructions are executed by one or more computers, the one or more computers are enabled to implement the method according to any one of claims 1 to 15.

31. A computer program product, wherein the computer program product stores instructions, and when the instructions are executed by a computer, the computer is enabled to implement the method according to any one of claims 1 to 15.
